Europäisches Patentamt

European Patent Office

Office européen des brevets

(19)

(11)  **EP 1 515 472 A1**

(12)  **DEMANDE DE BREVET EUROPEEN**

(43)  Date de publication:
   **16.03.2005  Bulletin 2005/11**

(51)  Int Cl.$^7$: **H04L 1/00**

(21)  Numéro de dépôt: **04104192.2**

(22)  Date de dépôt: **01.09.2004**

(84)  Etats contractants désignés:
   **AT BE BG CH CY CZ DE DK EE ES FI FR GB GR HU IE IT LI LU MC NL PL PT RO SE SI SK TR**
   Etats d'extension désignés:
   **AL HR LT LV MK**

(30)  Priorité: **12.09.2003  FR 0310760**

(71)  Demandeur: **Thales**
   **92200 Neuilly Sur Seine (FR)**

(72)  Inventeur: **Painchault, Philippe**
   **94117 CX Arcueil (FR)**

(74)  Mandataire: **Dudouit, Isabelle**
   **THALES Intellectual Property,**
   **31-33 avenue Aristide Briand**
   **94117 Arcueil Cedex (FR)**

(54)  **Codage linéaire pour transmissions erratiques**

(57)  Procédé pour transmettre de l'information, l'information contenant n cellules porteuses de l'information, avec n supérieur ou égal à 2 comportant au moins les étapes suivantes :

- générer un masque $\{Mi\}_{i=1,n}$ de n cellules correspondant aux n cellules porteuses d'information,

- effectuer une combinaison linéaire d'au moins toutes les n cellules avec les n cellules du masque généré pour obtenir un mot résultant,
- réaliser une opération linéaire des n cellules du mot résultant pour obtenir une cellule $B_{T,,j}$ à transmettre.

Informations partagées

Information transmise

Fig. 1

**Description**

L'invention concerne un procédé de transmission d'information.

Il s'applique notamment dans tous les cas où les moments de transmission effectifs ne sont pas explicitement contrôlés. Cela comprend par exemple les cas suivants :

- Le récepteur utilise une information en boucle, le récepteur pouvant commencer son écoute à n'importe quel instant avec un canal supposé suffisamment brouillé pour que la simple émission en boucle de l'information ne soit pas une stratégie efficace. Ce système est notamment adapté aux cas où il existe des trous dans l'émission (évanouissement ou fading en termes anglo-saxon, code détecteur d'erreur).
- Une même information est, ou peut être diffusée par plusieurs émetteurs, et toutes les informations émises doivent pouvoir être utilisées.

Il est connu de l'art antérieur de transmettre les informations en utilisant des codes correcteurs d'erreurs linéaires. Dans ce cas, un mot de taille fixe est transformé en un autre mot de taille fixe. Les codes utilisés sont par exemple des codes convolutifs variant dans le temps, éventuellement avec entrelacement. Cependant, même ces codes ne considèrent que des variations locales des combinaisons linéaires et n'englobent pas la dépendance potentielle de toutes les entrées. De plus, le processus de décodage se base sur un algorithme général de résolution de système linéaire et non sur un processus spécifique.

Dans le cas où l'information à transmettre est un message donné à émettre, une autre stratégie consiste à ré-émettre continuellement le message. Cette stratégie peut être efficace si le taux d'erreur est faible, et si une seule source d'émission est présente à un instant. Dans ce cas, le temps moyen pour obtenir l'ensemble des données peut se rapprocher de la taille des données. Par contre, dès que la probabilité d'erreur augmente, le temps d'écoute nécessaire peut augmenter notablement.

L'invention concerne notamment un procédé pour transmettre de l'information, l'information contenant n cellules porteuses de l'information, avec n supérieur ou égal à 2. Il est caractérisé en ce qu'il comporte au moins les étapes suivantes :

a) générer un masque $\{Mi\}_{i=1,n}$ de n cellules correspondant aux n cellules porteuses d'information,
b) effectuer une combinaison linéaire d'au moins toutes les n cellules avec les n cellules du masque généré pour obtenir un mot résultant,
c) réaliser une opération linéaire des n cellules du mot résultant pour obtenir une cellule $B_{T,j}$ à transmettre.

Le procédé peut comporter les étapes suivantes :

d) pour chaque cellule $B_{T,j}$ reçue déterminer le masque $\{Mi\}_{i=1,n}$ correspondant,
e) inverser le système linéaire formé des p cellules reçues.

Une cellule est par exemple un bit ou un symbole.

Le procédé peut comporter une étape préalable où les paquets de l'information à transmettre sont décomposés en plusieurs sous-paquets.

L'invention concerne aussi un dispositif de transmission d'informations comportant :

- un émetteur adapté à générer un masque $\{Mi\}_{i=1,n}$ de n cellules correspondant aux n cellules porteuses d'information et obtenu à partir d'une information commune aux cellules émises et en utilisant une loi « Deriv » telle que $\{Mi\}_{i=1,n} = Deriv(T, j)$, effectuer une combinaison linéaire d'au moins toutes les n cellules avec les n cellules du masque généré pour obtenir un mot résultant, et réaliser une opération linéaire des n cellules du mot résultant pour obtenir une cellule $B_{T,j}$ à transmettre,
- un récepteur adapté à déterminer le masque $\{Mi\}_{i=1,n}$ correspondant, pour chaque cellule $B_{T,j}$ reçue et inverser le système linéaire formé des p cellules reçues.

L'invention concerne aussi un récepteur adapté à déterminer un masque $\{Mi\}_{i=1,n}$ de n cellules correspondant aux n cellules porteuses d'information et obtenu à partir d'une information commune aux cellules émises et en utilisant une loi « Deriv » telle que $\{Mi\}_{i=1,n} = Deriv(T, j)$.

Le procédé offre notamment les avantages suivants :

- Il diminue le temps de reconstitution des données au niveau du récepteur. Selon différentes hypothèses sur le système, il est par exemple possible de gagner un temps de l'ordre de $\dfrac{K}{\log(N)}$, où N est le nombre de bits de la donnée à transmettre et où K est typiquement compris entre 1 et 2.

- Ce système permet d'utiliser plusieurs émetteurs.
- Dans le cas d'une émission en boucle, le récepteur peut se mettre en écoute aux moments où il le désire.
- La quantité d'informations reçues par le récepteur est directement proportionnelle au temps d'émission, elle n'est pas limitée à la structure du code ; le masque utilisé est construit à chaque instant, et variable dans le temps.

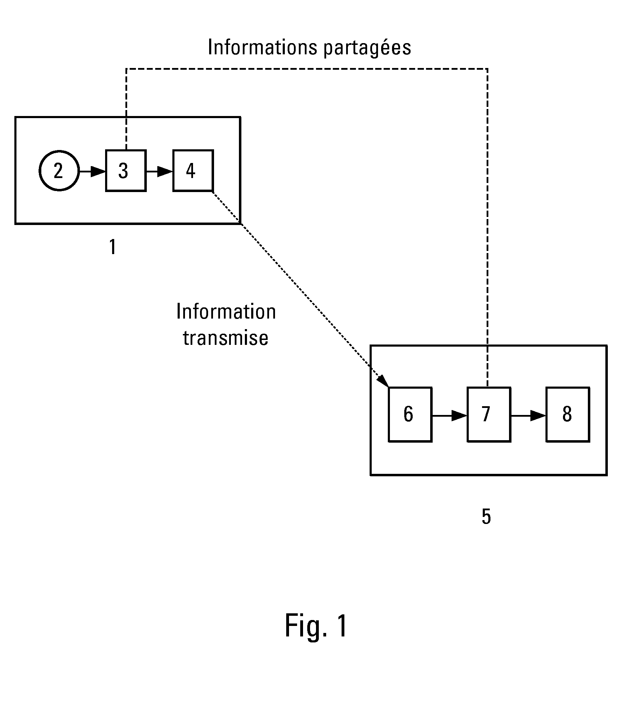

D'autres caractéristiques et avantages de l'invention apparaîtront mieux à la lecture d'un exemple de réalisation donné à titre d'exemple non limitatif, illustré de la figure 1 unique qui représente un système permettant l'échange d'information entre un émetteur et un récepteur.

De manière à mieux faire comprendre le principe mis en oeuvre par l'invention, l'exemple donné ci-après concerne un procédé pour la transmission d'information entre un émetteur et un récepteur. L'information à transmettre se présente sous la forme de bits porteurs de l'information et le procédé suppose que l'émetteur et le récepteur partagent une information commune d'indexation des données émises, telle que le temps, le numéro de trame, etc. Cette information commune référence le bit. Sans sortir du cadre de l'invention, le système peut comporter plusieurs émetteurs.

Le procédé suppose, a priori, que le récepteur ne peut communiquer en retour avec l'émetteur pour lui indiquer les paquets qu'il a reçus. Cela peut être le cas lors de la diffusion à un grand nombre de récepteurs.

Dans la description qui suit, on utilise le terme bit et les opérations logique ET et XOR. Les principes s'appliquent toutefois à toute cellule élémentaire porteuse d'information et avec toute forme de loi linéaire.

La figure 1 schématise un exemple de système de transmission d'information selon l'invention comportant par exemple :

- un émetteur 1 comprenant un premier bloc 2 correspondant aux données à transmettre, un dispositif 3 selon l'invention adapté à la génération de masques variables en général, à la fabrication des combinaisons linéaires, ce bloc 3 a accès aux informations partagées, un codeur de canal 4 quelconque adapté au canal effectif,
- un récepteur 5 comprenant un décodeur de canal 6, un dispositif 7 d'analyse des données reçues, ce dispositif ayant accès à l'information partagée et une partie 8 adaptée à effectuer une analyse linéaire selon les étapes du procédé.

Le procédé selon l'invention comporte au moins les étapes décrites ci-après :

Au niveau de l'émetteur

A partir de l'information commune référençant les bits émis, pour chaque bit bi émis, le procédé effectue plusieurs combinaisons linéaires des données à transmettre, de la manière suivante

a) Par exemple, pour une information commune constituée d'un numéro T de trame et d'un numéro de bit j, et pour des données à transmettre se présentant sous la forme de nbits {Di}i=1,n, le procédé définit une loi désignée « Deriv » permettant, à partir de l'information commune ici le numéro de trame, de dériver un masque M de n bits :

$$\{M_i\}_{i=1,n} = Deriv(T,,j) \qquad (1)$$

La dérivation varie en fonction du temps, les masques, en fonctionnement normal, ne se répètent pas de manière régulière pour que lors de la reconstitution on ne perde par d'informations. La répartition des données s'effectuent sur un nombre d'instants importants.

b) Effectuer une combinaison linéaire en opérant une fonction logique, par exemple la fonction « ET », ceci bit à bit entre un bit j des données à transmettre et le bit correspondant Mj du masque généré. Cette opération est réalisée n fois, ce qui permet d'obtenir un mot résultant comportant n bits. Effectuer un XOR de tous les bits du mot résultant afin d'obtenir un bit $B_{T,,j}$

$$B_{T,j} = \underset{i=1,n}{\oplus} (D_i \wedge M_i) \qquad (2)$$

Les bits de données à transmettre peuvent être bufférisées pour réaliser l'étape b). La combinaison linéaire dépend du temps.

Selon une autre variante de réalisation, lorsque l'on prend en compte plusieurs émetteurs, le procédé définit une loi désignée « Deriv », permettant, à partir de l'information commune de dériver un masque M de n bits :

$$\{Mi\}_{i=1,n} = \text{Deriv}(T,,j, k )$$

où k correspond à la référence d'un émetteur.
Cette variante s'applique par exemple dans le cas d'un système satellitaire.

Au niveau du récepteur

Le procédé reconstitue l'information après avoir obtenu un nombre p suffisant de bits d'information. Le nombre p de bits est par exemple au moins égal au nombre n de bits de l'information transmise.

c) Pour chaque bit $B_{T,j}$ reçu, le procédé calcule le masque correspondant $\{Mi\}_{i=1,n}$ selon la relation (1). Le bit reçu $B_{T,j}$ et le masque correspondant Mj, forment une équation linéaire. Après avoir reçu p bits, le système linéaire ainsi constitué (bit reçu $B_{T,j}$ avec j variant de 1 à p, et les p masques correspondants) est inversible avec une probabilité élevée, lorsque le nombre p de bits reçus est supérieur ou égal au nombre n de bits à émettre.

d) Inverser le système linéaire pour retrouver les bits émis. Le système linéaire obtenu est quelconque.

Le système peut écouter au moment où il le désire. Toute information supplémentaire peut ainsi être utilisée. Ceci conduit à un système cohérent.

Selon une variante de réalisation, lorsque l'information à transmettre est constituée de paquets ayant des tailles importantes, le procédé comporte une étape préalable où les paquets sont découpés en sous-paquets selon des méthodes connues de l'Homme du métier.

Par exemple, une taille de paquet de 64 bits permet de conserver des performances intéressantes, tout en limitant la complexité de résolution des systèmes linéaires. L'information commune est alors également utilisée pour déterminer le bloc de données à considérer.

Il est aussi possible d'utiliser des contrôles de CRC pour des paquets de taille importante.

L'exemple chiffré donné pour un système à un émetteur qui suit permet d'illustrer le procédé selon l'invention :

On considère par exemple un système composé d'un émetteur, devant transmettre une information D de taille connue, avec une référence temporelle commune *(T, j)*, référençant chaque bit à émettre. L'émetteur possède un identifiant *No*.

L'information *D* est découpée en *N* blocs de 64 bits.

L'algorithme de chiffrement DES ([DES]) est utilisé. La clé choisie est l'identifiant *No.* Pour chaque bit j à transmettre, l'émetteur calcule le chiffré de l'information temporelle *(T, j)* indiçant le bit : $M = \text{DES}_{No}((T, j))$. Ce calcul fournit 64 bits en sortie.

L'émetteur opère alors le produit scalaire entre *M* et les données du bloc (*T* %*N*). Le bit émis est le bit résultat de ce produit scalaire.

Le récepteur opère également le calcul : $\text{DES}_{No}((T, j))$, ainsi que le calcul du modulo (*T*%*N*). Il dispose ainsi des paramètres de la combinaison et du résultat. Ces données alimentent un ensemble de résolution de systèmes linéaires. Après un nombre d'observations suffisant, ces systèmes permettent de retrouver l'information à transmettre.

L'algorithme de chiffrement [DES] NBS FIPS PUB 46 est décrit par exemple dans le document intitulé « Data Encryption Standard » National Bureau of Standards, U. S. Department of Commerce, Jan. 1977

Sans sortir du cadre de l'invention, le système selon l'invention comporte plusieurs émetteurs. Les lois et les étapes mises en oeuvre sont identiques à celles décrites dans le cadre d'un émetteur, l'identifiant No différenciant les émetteurs.

Dans ce cas, si le récepteur peut physiquement obtenir simultanément des données provenant de plusieurs émetteurs, la transmission est accélérée d'autant. En effet, les combinaisons linéaires dépendant du numéro d'émetteur sont différentes d'un émetteur à l'autre, et donc les équations linéaires obtenus peuvent être exploitées indépendamment.

**Revendications**

**1.** Procédé pour transmettre de l'information, l'information contenant n cellules porteuses de l'information, avec n supérieur ou égal à 2 **caractérisé en ce qu'**il comporte au moins les étapes suivantes :

a) générer un masque $\{Mi\}_{i=1,n}$ de n cellules correspondant aux n cellules porteuses d'information, à partir d'une information commune aux cellules émises et en utilisant une loi « Deriv » telle que $\{Mi\}_{i=1,n}$ = Deriv(T, j),

b) effectuer une combinaison linéaire d'au moins toutes les n cellules avec les n cellules du masque généré pour obtenir un mot résultant,

c) réaliser une opération linéaire des n cellules du mot résultant pour obtenir une cellule $B_{T,j}$ à transmettre.

2. Procédé selon la revendication 1 **caractérisé en ce qu'**il comporte les étapes suivantes :

d) pour chaque cellule $B_{T,j}$ reçue déterminer le masque $\{Mi\}_{i=1,n}$ correspondant,

e) inverser le système linéaire formé des p cellules reçues.

3. Procédé selon la revendication 1 **caractérisé en ce que** l'on utilise un masque $\{Mi\}_{i=1,n}$ obtenu à partir d'une information commune aux cellules émises et en utilisant une loi « Deriv » telle que $\{Mi\}_{i=1,n}$ = Deriv(T, j, k), où k est l'indice du récepteur.

4. Procédé selon l'une des revendications 1 à 2 **caractérisé en ce qu'**une cellule est un bit.

5. Procédé selon l'une des revendications 1 à 2 **caractérisé en ce qu'**une cellule est un symbole.

6. Procédé selon l'une des revendications 1 ou 2 **caractérisé en ce que** la combinaison linéaire est effectuée en opérant une fonction logique, telle que la fonction « ET ».

7. Procédé selon l'une des revendications 1 ou 2 **caractérisé en ce que** l'opération linéaire des n cellules du mot résultant est une opération « XOR ».

8. Procédé selon l'une des revendications 1 à 7 **caractérisé en ce qu'**il comporte une étape préalable où les paquets de l'information à transmettre sont décomposés en plusieurs sous-paquets.

9. Dispositif de transmission d'information **caractérisé en ce qu'**il comporte au moins :

- un émetteur adapté à générer un masque $\{Mi\}_{i=1,n}$ de n cellules correspondant aux n cellules porteuses d'information et obtenu à partir d'une information commune aux cellules émises et en utilisant une loi « Deriv » telle que $\{Mi\}_{i=1,n}$ = Deriv(T, j), effectuer une combinaison linéaire d'au moins toutes les n cellules avec les n cellules du masque généré pour obtenir un mot résultant, et réaliser une opération linéaire des n cellules du mot résultant pour obtenir une cellule $B_{T,j}$ à transmettre,

- un récepteur adapté à déterminer le masque $\{Mi\}_{i=1,n}$ correspondant, pour chaque cellule $B_{T,j}$ reçue et inverser le système linéaire formé des p cellules reçues.

10. Récepteur recevoir une information contenant n cellules porteuses de l'information, avec n supérieur ou égal à 2 **caractérisé en ce qu'**il comporte un moyen adapté à déterminer un masque $\{Mi\}_{i=1,n}$ de n cellules correspondant aux n cellules porteuses d'information et obtenu à partir d'une information commune aux cellules émises et en utilisant une loi « Deriv » telle que $\{Mi\}_{i=1,n}$ = Deriv(T, j).

Informations partagées

2 → 3 → 4

1

Information
transmise

6 → 7 → 8

5

Fig. 1

EP 1 515 472 A1

Office européen
des brevets

**RAPPORT DE RECHERCHE EUROPEENNE**

*Numéro de la demande*

EP 04 10 4192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 1 244 237 A (SAMSUNG ELECTRONICS CO LTD) 25 septembre 2002 (2002-09-25) * page 12, ligne 16 - ligne 33 * * page 21, ligne 10 - ligne 16 * * figures 5,6 * | 1-10 | H04L1/00 |
| Y | US 5 768 390 A (MATYAS JR STEPHEN MICHAEL ET AL) 16 juin 1998 (1998-06-16) * colonne 5, ligne 26 - ligne 33 * | 1-10 | |
| A | WO 01/03366 A (SAMSUNG ELECTRONICS CO LTD) 11 janvier 2001 (2001-01-11) * page 15, ligne 5 - page 18, ligne 3 * * figure 14 * | 1-4,9,10 | |
| A | TREMBLAY M ET AL: "Support for fault tolerance in VLSI processors" PROCEEDINGS OF THE INTERNATIONAL SYMPOSIUM ON CIRCUITS AND SYSTEMS, PORTLAND, 8 mai 1989 (1989-05-08), pages 388-393, XP010084700 * page 389, colonne de gauche, ligne 1 - ligne 8 * | 7 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| La Haye | 15 décembre 2004 | Ghigliotti, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

7

## ANNEXE AU RAPPORT DE RECHERCHE EUROPEENNE
## RELATIF A LA DEMANDE DE BREVET EUROPEEN NO.

EP 04 10 4192

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-12-2004

| Document brevet cité au rapport de recherche | | Date de publication | Membre(s) de la famille de brevet(s) | | Date de publication |
|---|---|---|---|---|---|
| EP 1244237 | A | 25-09-2002 | BR | 0204496 A | 22-06-2004 |
| | | | CA | 2407691 A1 | 26-09-2002 |
| | | | CN | 1461529 T | 10-12-2003 |
| | | | EP | 1244237 A2 | 25-09-2002 |
| | | | JP | 2004527949 T | 09-09-2004 |
| | | | WO | 02075930 A1 | 26-09-2002 |
| | | | KR | 2002075148 A | 04-10-2002 |
| | | | RU | 2231217 C1 | 20-06-2004 |
| | | | US | 2003026224 A1 | 06-02-2003 |
| US 5768390 | A | 16-06-1998 | AUCUN | | |
| WO 0103366 | A | 11-01-2001 | AT | 279827 T | 15-10-2004 |
| | | | AU | 765735 B2 | 25-09-2003 |
| | | | AU | 5854300 A | 22-01-2001 |
| | | | BR | 0012179 A | 16-07-2002 |
| | | | CA | 2378493 A1 | 11-01-2001 |
| | | | CN | 1367967 T | 04-09-2002 |
| | | | DE | 20023280 U1 | 17-07-2003 |
| | | | DE | 60014897 D1 | 18-11-2004 |
| | | | EP | 1188269 A1 | 20-03-2002 |
| | | | EP | 1475911 A1 | 10-11-2004 |
| | | | EP | 1475912 A1 | 10-11-2004 |
| | | | EP | 1475913 A1 | 10-11-2004 |
| | | | JP | 3579027 B2 | 20-10-2004 |
| | | | JP | 2003503951 T | 28-01-2003 |
| | | | JP | 2004260863 A | 16-09-2004 |
| | | | JP | 2004248331 A | 02-09-2004 |
| | | | JP | 2004304837 A | 28-10-2004 |
| | | | JP | 2004304838 A | 28-10-2004 |
| | | | WO | 0103366 A1 | 11-01-2001 |
| | | | KR | 2001015268 A | 26-02-2001 |
| | | | PL | 352897 A1 | 22-09-2003 |
| | | | RU | 2236752 C2 | 20-09-2004 |
| | | | ZA | 200200091 A | 06-01-2003 |

EPO FORM P0460

Pour tout renseignement concernant cette annexe : voir Journal Officiel de l'Office européen des brevets, No.12/82